# FASCICULE DE BREVET EUROPEEN

(11) **EP 1 780 085 B1**
(45) Date de publication et mention de la délivrance du brevet: **04.11.2009**
(21) Numéro de dépôt: 07101927.7
(22) Date de dépôt: 01.12.2003
(51) Int. Cl.: B60R 19/18

(54) **Ensemble d'un renfort et d'une coque de poutre avec logement pour le renfort au droit des longerons**
Einheit aus einem Verstärkungselement und einer Schalenförmiger Stossfängerträger mit Lagerung für das senkrecht zu den Längsholmen verlaufendes Verstärkungselement
Unit from a stiffening element and a bumper beam shell with housing for the stiffening element at right angle to the frame rails

(30) Priorité: 29.11.2002 FR 0215100
(43) Date de publication de la demande: 02.05.2007
(62) Demande divisionnaire de: 03292993.7
(73) Titulaire: COMPAGNIE PLASTIC OMNIUM, 69007 Lyon (FR)
(72) Inventeur: Roussel, Thierry, 52500, Fayl La Foret (FR); Malteste, Stéphane, 01800, Meximieux (FR); Pierrot, Frédéric, 01500 Amberieu en Bugey (FR)
(74) Mandataire: Remy, Vincent Noel Paul

(56) Documents cités:
- US-A- 5 114 198

## Description

La présente invention concerne un ensemble d'un renfort et d'une coque de poutre de véhicule automobile ainsi qu'une poutre de véhicule automobile.

On sait qu'il est nécessaire que les véhicules automobiles puissent anticiper considérablement le transfert des efforts sur des absorbeurs d'énergie lors d'un choc, tel que le choc Danner à moyenne vitesse. Pour absorber cette énergie, on peut monter des prolonges entre les longerons du véhicule et la peau de pare-chocs.

Des prolonges métalliques ont déjà été utilisées dans les pare-chocs en raison de leur bonne rigidité. De telles pièces présentent néanmoins l'inconvénient d'être relativement lourdes. En outre, elles ne s'adaptent pas facilement à une configuration géométrique particulière qui peut être imposée par le véhicule, nécessitant parfois l'ajout de pièces supplémentaires couramment appelées absorbeurs.

C'est pourquoi on a tenté de remplacer les prolonges métalliques par des pièces en matière plastique qui répondent plus favorablement à ces deux critères de poids et de géométrie.

Néanmoins, du fait du peu de rigidité inhérente aux matières utilisées, ces pièces en matière plastique doivent présenter une structure complexe, notamment des nervures, et la matière utilisée doit être mélangée à des fibres de renfort qui augmentent son coût et complexifient la fabrication des pièces, ce qui tend à atténuer, sans pour autant les éliminer, les avantages procurés par le recours à de la matière plastique.

Le document EP 1 197 396 A2 décrit un ensemble selon le préambule de la revendication 1.

La présente invention vise à proposer une solution permettant de bénéficier de l'aptitude des poutres en matière plastique à s'adapter facilement à des formes spécifiques ainsi que de la rigidité apportée par un ou plusieurs renforts métalliques, sans en présenter les inconvénients.

A cet effet, l'invention a pour objet un ensemble d'un renfort et d'une coque de poutre de véhicule automobile selon la revendication 1.

Grâce à l'invention, le logement prévu dans la coque pour recevoir le renfort métallique peut permettre d'éviter d'avoir à fixer ce renfort à la coque. On évite ainsi les fragilisations engendrées par les fixations du renfort sur la coque. De même, on évite les manipulations et on facilite le recyclage en fin de vie de la poutre constituée par la coque et le renfort.

Par ailleurs, une telle coque peut recevoir deux renforts au droit de chaque longeron du véhicule, de façon que ces renforts absorbent l'énergie de chocs à moyenne vitesse tels que le choc Danner.

Par ailleurs, le logement permet d'obtenir un corps creux qui constitue en soi une structure rigidifiante pour la coque, ce qui ajoute à l'accroissement de rigidité résultant de la présence du renfort dans la coque.

Le logement est dimensionné pour épouser la forme extérieure du renfort dans certaines zones, par exemple en partie centrale de la coque ou dans la partie de la coque disposée au droit de longerons du véhicule.

Un ensemble selon l'invention peut en outre comporter l'une ou plusieurs des caractéristiques suivantes :
- le logement est délimité par une partie de la coque présentant une section ouverte ;
- la coque est dimensionnée pour épouser la forme intérieure de la peau de pare-chocs derrière laquelle la poutre doit prendre place ;
- elle comporte plusieurs logements pour recevoir plusieurs renforts ;
- le logement comporte des moyens d'absorption de chocs;
- la coque est réalisée en matière thermoplastique, notamment en polypropylène ; et
- le logement consiste en un canal.

Dans un mode de réalisation particulier, la coque comporte au moins deux moyens de fixation à la structure du véhicule et un logement s'étend longitudinalement d'un moyen de fixation à l'autre.

Ainsi, la coque peut recevoir, en outre des prolonges des longerons, un renfort entre les deux longerons, par exemple une traverse métallique, sous forme de tube à section rectangulaire. Ce renfort permet alors de rigidifier considérablement la poutre et de diminuer la pénétration d'un poteau lors d'un impact tel que celui du « pôle test ».

Selon un autre mode de réalisation, la coque de poutre comporte une doublure de coque qui vient s'emboîter avec la coque en formant un corps creux délimitant le logement recevant le renfort.

Ainsi, la doublure de coque permet de faciliter la fixation du renfort métallique dans la coque en matière plastique.

La coque en matière plastique peut être obtenue par moulage ou par extrusion. Elle peut aussi être surmoulée sur le ou les renforts reçus dans son logement.

L'ensemble selon l'invention peut en outre comporter l'une ou plusieurs des caractéristiques suivantes :
- le renfort assure une fonction de soutien vertical de la poutre ;
- le renfort est une prolonge de longeron tubulaire ayant une génératrice sensiblement parallèle à la direction longitudinale du véhicule ;
- la prolonge est en forme de tube biseauté ;
- le renfort comporte une pièce support, notamment un support d'un anneau d'arrimage/remorquage.

La présente invention a enfin pour objet une poutre de véhicule automobile destinée à prendre place derrière une peau de pare-chocs, caractérisée en ce qu'elle comprend un renfort et une coque telle que décrite ci-dessus.

Cette poutre peut comprendre plusieurs renforts métalliques.

L'invention sera mieux comprise à la lecture de la description qui va suivre, donnée uniquement à titre d'exemple et faite en se référant aux dessins annexés dans lesquels :
- la figure 1 est une vue en perspective éclatée d'une poutre de pare-chocs selon un premier mode de réalisation de l'invention ;
- la figure 2 est une vue de l'arrière d'une partie de la poutre de la figure 1 ;
- la figure 3 est une vue en perspective d'une poutre de pare-chocs selon un deuxième mode de réalisation ne correspondant pas à l'invention;
- la figure 4 est une vue analogue à la figure 3 montrant un renfort seul ;
- la figure 5 est une vue de dessus d'une poutre de pare-chocs selon un troisième mode de réalisation de l'invention ne correspondant pas à l'invention; et
- la figure 6 est une vue en coupe selon VI-VI de la figure 5.

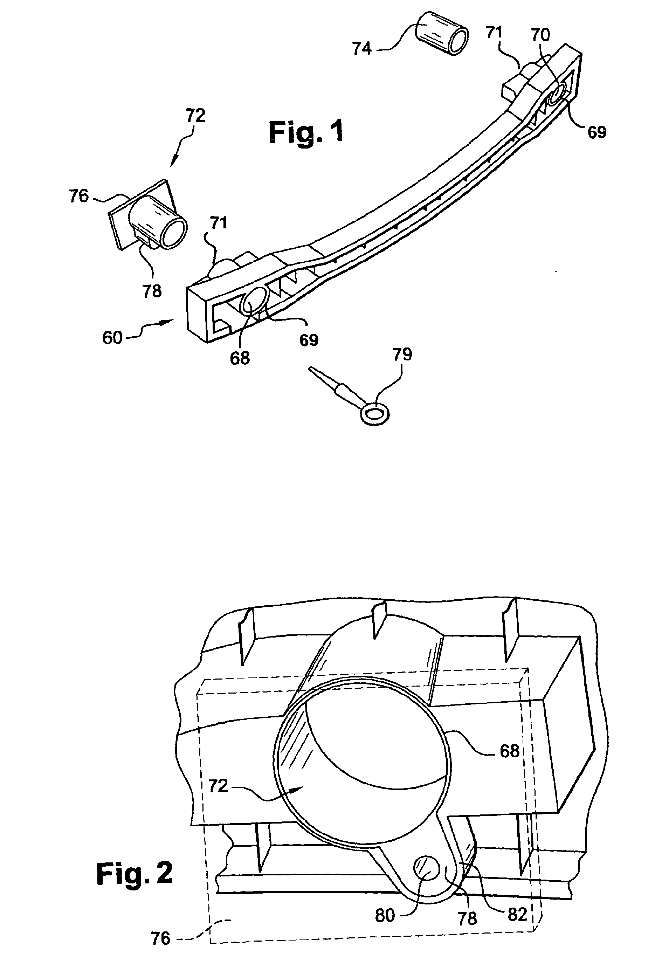

Dans le mode de réalisation de la figure 1, la poutre comprend une coque 60 réalisée en polypropylène ou polycarbonate-polybutyrènetéréphtalate, éventuellement chargés de fibres de verre longues (supérieures à 1mm), ou mélangés à un renfort constitué d'un tissu surmoulé tel que le Twintex de la société Vetrotex.

Cette coque est obtenue par moulage par injection, par compression ou par extrusion-pressage dans des conditions usuelles.

La coque 60, lorsqu'elle est montée sur le véhicule automobile, est agencée directement derrière une peau de pare-chocs (ou bouclier), et est dimensionnée pour épouser la forme intérieure de cette peau.

La coque 60 comprend deux logements 68 et 70 destinés à recevoir deux renforts 72 et 74. Ces renforts constituent des prolonges 72 et 74 agencées au droit des longerons (non représentés) lorsque la poutre est montée sur le véhicule.

Les logements 68, 70 comportent chacun deux extrémités 69 et 71. L'extrémité 69, dite extrémité externe, est destinée à être en regard de la peau du pare-chocs lorsque la coque est montée sur le véhicule. L'extrémité 71 des logements 68 et 70, dite extrémité interne, est destinée à être en regard de chaque longeron.

Les prolonges 72 et 74 sont en forme de tube et comportent chacune une extrémité externe destinée à être en regard de la peau du pare-chocs, et une extrémité interne destinée à être en regard de chaque longeron. Ces prolonges 72 et 74 sont réalisées dans un matériau résistant, tel que l'acier, l'aluminium ou un matériau composite rigidifiant. Les prolonges 72 et 74 traversent toute l'épaisseur de la coque 60, de façon qu'en cas de choc, ce soient elles qui subissent l'effort. Par conséquent, une poutre composée de la coque 60 avec les prolonges 72 et 74 procure une résistance aux chocs similaire à celle d'une poutre en métal, tout en comportant une coque en matière plastique, légère et facile à mouler.

Par ailleurs, la poutre possède une rigidité supplémentaire grâce aux corps creux 68 et 70 agencés dans la coque 60.

Les prolonges 72, 74 peuvent être rapportées par l'avant ou par l'arrière de la coque 60.

Sur la prolonge 72, on a fixé un support 78 d'un anneau 79 d'arrimage/remorquage. L'anneau 79 est fixé au support 78 de façon classique, par exemple par vissage.

La prolonge 72 est également munie d'une platine 76, destinée à être prise en sandwich entre la poutre et la platine du véhicule lors de la fixation de l'ensemble sur le véhicule. La platine 76 assure une fixation consolidée de la prolonge 72 sur la coque 60, en vue d'une sollicitation plus grande de cette prolonge par l'anneau 79 d'arrimage/remorquage.

Selon un mode de réalisation non représenté, les deux prolonges reçues dans la coque comportent une platine telle que la platine 76.

Selon un autre mode de réalisation non représenté, les prolonges 72 et 74 ont une extrémité biseautée leur permettant de s'adapter au galbe du pare-chocs.

On peut voir sur la figure 2 que la coque 60 comporte, en plus du logement 68 destiné à recevoir la prolonge 72, un logement 82 destiné à recevoir le support 78 de l'anneau 79 d'arrimage/remorquage.

Selon un mode de réalisation non représenté, la coque 60 peut s'emboîter avec une doublure de coque, située entre la peau de pare-chocs et la coque 60. Cette doublure de coque offre l'avantage de délimiter les logements 68 et 70 enfermant les prolonges 72 et 74. Ainsi, les prolonges sont maintenues à l'intérieur de la coque 60 par le seul emboîtement de cette dernière dans la doublure de coque, les prolonges n'étant fixées en aucun point ni à la coque, ni à la doublure de coque. L'intégrité de la coque est ainsi respectée et aucune zone de fragilité de cette dernière n'est créée.

Selon un mode de réalisation non représenté, la coque 60 comporte, en plus des renforts 72 et 74, un autre renfort sous forme de traverse en forme de tube métallique à section rectangulaire, s'étendant du logement 68 au logement 70. Pour recevoir un tel renfort, la section de la coque est en U de façon à délimiter un logement allongé. Pour fixer un tel renfort dans la coque, une doublure de coque en matière plastique vient s'emboîter dans la coque, de façon à fermer la section ouverte du logement et former corps creux allongé délimitant un logement enfermant le renfort métallique.

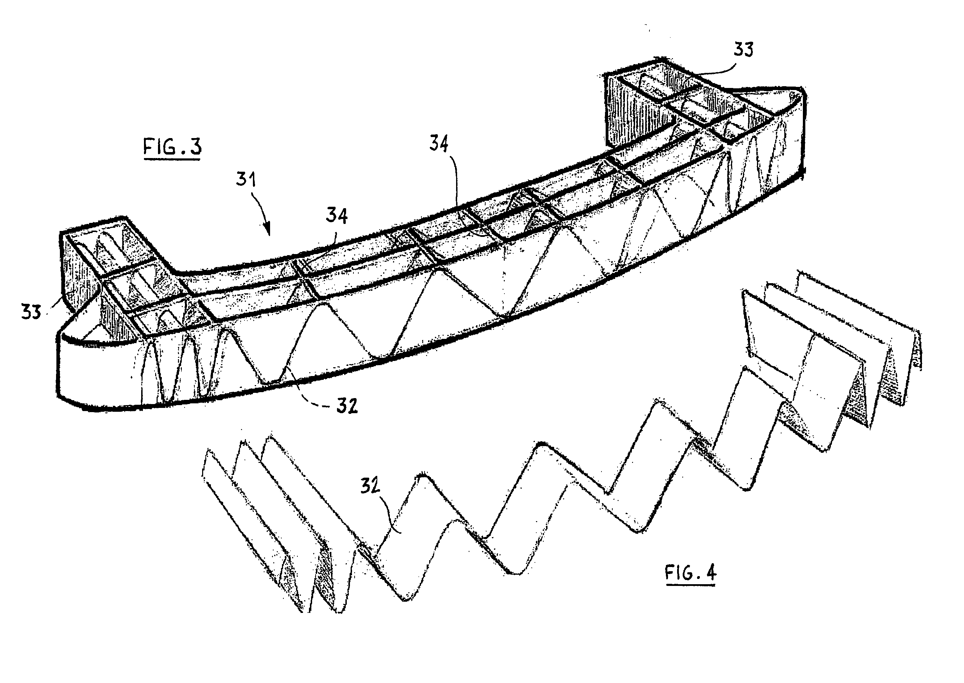

Dans le mode de réalisation de la figure 3 qui ne correspond pas à l'invention , la coque 31 en polypropylène renforcé de fibres de verre présente une section ouverte vers le haut et vers le bas (lorsqu'elle est positionnée sur le véhicule), incorporant un renfort métallique surmoulé 32.

Ce renfort est ici constitué par une tôle ondulée dont la génératrice est horizontale et parallèle à la direction de roulement du véhicule.

Comme on le voit sur la figure 4, les ondulations de la tôle sont irrégulières. Elles sont telles que le renfort offre davantage de matière dans les parties 33 de la poutre situées dans le prolongement des longerons du véhicule, parties 33 qui, outre le fait de rigidifier, servent de moyens de fixation de la coque 31 à la structure du véhicule.

On peut noter que l'orientation de la tôle est propice à une absorption efficace d'énergie en cas de chocs frontaux, par flambage de sa paroi qui est perpendiculaire à la direction de tels chocs.

On remarque que la tôle ondulée occupe toute l'épaisseur de la poutre, y compris à ses extrémités qui sont plus larges pour s'étendre sur toute l'épaisseur des parties 33 de la coque prévues pour être assujetties aux longerons (non représentés).

Dans l'exemple décrit, le renfort est considéré comme reçu dans un logement qui épouse exactement sa forme extérieure du fait que la coque est surmoulée sur la tôle ondulée. Ce mode de fabrication est applicable à toutes formes de renfort.

Des nervures 34 ménagées dans la coque accroissent la rigidité de cette dernière et participent, en combinaison avec le renfort, à la tenue mécanique de l'ensemble.

En particulier, les nervures de la coque assurent le soutien vertical de la poutre.

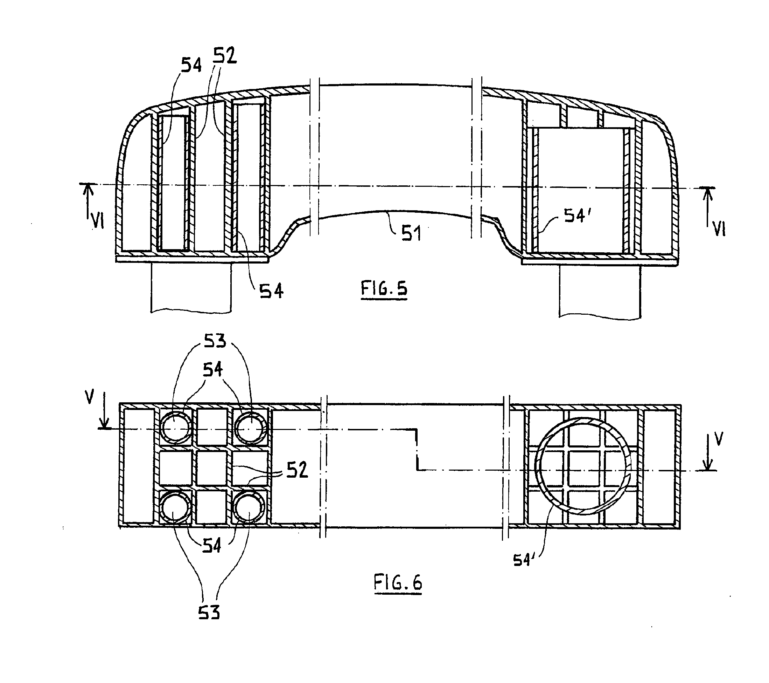

Dans le troisième mode de réalisation non revendiqué, des figures 5 et 6 qui ne correspond pas à l'invention, la coque 51 est munie de nervures croisées 52, notamment au droit des longerons (non représentés), pour former des nids d'abeilles constituant des absorbeurs locaux.

Les croisements de nervures délimitent des logements 53 aptes à recevoir des renforts sous forme de tubes 54 ou de profilés, de section quelconque et par exemple circulaire, disposés dans la direction de roulement du véhicule.

En fonction du besoin, qui est déterminé en particulier par le poids du véhicule, certains ou tous les logements définis par les nervures peuvent recevoir des renforts.

Dans une variante, illustrée par la partie droite de la poutre sur la figure 4, les nervures 52 intérieures ne s'étendent pas sur toute l'épaisseur de la coque (dans la direction de roulement du véhicule) mais libèrent un logement plus important entre les nervures périphériques pour un renfort 54' de gros diamètre. L'homme du métier saura choisir le renfort le plus approprié et la configuration à retenir pour les nervures.

Parmi les avantages de l'invention, on notera que le renfort apporté par les prolonges 72 et 74, éventuellement accompagné d'un renfort central, permet d'obtenir une poutre en matière plastique rigide dont la fixation des renforts à la coque 60, ne fragilise pas l'ensemble de la poutre.

Par ailleurs, grâce à la résistance du matériau de la prolonge 72, le support 78 de l'anneau d'arrimage/remorquage 79 bénéficie d'un bon ancrage pour être fixé à la poutre de façon suffisamment solide pour assurer sa fonction.

On notera également que les prolonges 72 et 74, une fois rapportées sur la coque 60 de la poutre, permettent de renforcer, grâce à leur matériau rigide, la poutre afin de satisfaire aux exigences des cahiers des charges de cette poutre.

Un autre avantage consiste en ce que les renforts agencés dans la coque de poutre assurent, en plus de leur fonction de rigidification pour les chocs, une fonction de soutien vertical (en Z) de la poutre, et donc du pare-chocs.

Cette fonction est particulièrement utile pour les pare-chocs arrière qui servent de seuil de chargement, mais aussi pour des pare-chocs avant susceptibles d'être sollicités verticalement par des utilisateurs.

Enfin, on comprend que les renforts métalliques décrits peuvent très facilement être séparés de la coque lorsque, en fin de vie de la poutre, les matériaux qui la constituent doivent être recyclés.

D'autres variantes pourraient être déduites des exemples décrits ci-dessus, par des modifications de structures ou de fonctions.

## Revendications

1. Ensemble d'un renfort et d'une coque de poutre de véhicule automobile destinée à prendre place derrière une peau de pare-chocs, la coque comportant un logement (68, 70) pour recevoir le renfort ( 72, 74) en son intérieur, ce renfort pouvant être par exemple un renfort métallique notamment en aluminium ou un renfort en matériau composite incorporant un métal, le logement comportant une extrémité, dite extrémité externe, agencée au voisinage immédiat de la peau de pare-chocs et une extrémité, dite extrémité interne, agencée au voisinage immédiat d'un longeron du véhicule, lorsque la coque de poutre est montée sur le véhicule,
le logement (68,70) étant dimensionné pour épouser la forme extérieure du renfort dans la partie de la coque disposée au droit du longeron, **caractérisé en ce que** le renfort est une prolonge (72,74) de longueur traversant toute l'épaisseur de la coque, de façon qu'en cas de choc, ce soit la prolonge qui subisse l'effort, le renfort étant muni d'une platine à son extrémité située au droit du longeron.

2. Ensemble selon la revendication 1, dans lequel la coque est obtenue par moulage par injection, par compression ou par extrusion-pressage.

3. Ensemble selon la revendication 1 ou 2, dans laquelle le logement est délimité par une partie de la coque (17) présentant une section ouverte.

4. Ensemble selon l'une quelconque des revendications 1 à 3, dans lequel la coque est dimensionnée pour épouser la forme intérieure de la peau de pare-chocs derrière laquelle la poutre doit prendre place.

5. Ensemble selon l'une quelconque des revendications 1 à 4, dans lequel la coque comporte plusieurs logements pour recevoir plusieurs renforts.

6. Ensemble selon l'une quelconque des revendications 1 à 5, dans lequel la coque est réalisée en matière thermoplastique notamment en polypropylène.

7. Ensemble selon l'une quelconque des revendications 1 à 6, dans lequel le logement consiste en un canal (68, 70).

8. Ensemble selon l'une quelconque des revendications 1 à 7, dans lequel la coque comporte au moins deux moyens de fixation à la structure du véhicule et comporte un logement s'étendant longitudinalement d'un moyen de fixation à l'autre.

9. Ensemble selon l'une quelconque des revendications 1 à 8, comportant une doublure de coque qui vient s'emboîter avec la coque en formant un corps creux délimitant le logement recevant le renfort.

10. Ensemble selon l'une quelconque des revendications 1 à 9, dans lequel le renfort assure une fonction de soutien vertical de la poutre.

11. Ensemble selon l'une quelconque des revendications 1-10 dans lequel le renfort est une prolonge (72, 74) de longeron tubulaire ayant une génératrice sensiblement parallèle à la direction longitudinale du véhicule,

12. Ensemble selon la revendication 11, dans lequel la prolonge est en forme de tube biseauté.

13. Ensemble selon l'une quelconque des revendications 1 à 12, dans lequel le renfort (72) comporte une pièce support (78), notamment un support d'un anneau (79) d'arrimage/remorquage.

14. Poutre de véhicule automobile destinée à prendre place derrière une peau de pare-chocs, **caractérisée en ce qu'**elle comprend un ensemble d'un renfort et d'une coque selon l'une des revendications précédentes.

## Claims

1. An assembly comprising a motor vehicle beam shell and reinforcement for placing behind a bumper skin, the shell including a housing (68, 70) for receiving the reinforcement (72, 74) therein, the reinforcement possibly being, for example, metal reinforcement, in particular made of aluminum, or composite material reinforcement incorporating a metal, the housing including one end, referred to as the outer end, arranged in the immediate vicinity of the bumper skin, and one end, referred to as the inner end, arranged in the immediate vicinity of a side rail of the vehicle, when the beam shell is mounted on the vehicle, the housing (68, 70) being dimensioned to match the outside shape of the reinforcement in the portion of the shell placed in register with the side rail, the assembly being **characterized in that** the reinforcement is an extension (72, 74) of the side rail passing through the entire thickness of the shell so that in the event of an impact, it is the extension that is subjected to the force, the reinforcement being provided with a plate at its end situated in register with the side rail.

2. An assembly according to claim 1, wherein the shell is obtained by injection molding, by compression, or by extrusion-pressing.

3. An assembly according to claim 1 or claim 2, wherein the housing is defined by a portion of the shell (17) presenting an open section.

4. An assembly according to any one of claims 1 to 3, wherein the shell is dimensioned to match the inside shape of the bumper skin behind which the beam is to be placed.

5. An assembly according to any one of claims 1 to 4, wherein the shell includes a plurality of recesses for receiving a plurality of reinforcements.

6. An assembly according to any one of claims 1 to 5, wherein the shell is made of thermoplastic material, in particular of polypropylene.

7. An assembly according to any one of claims 1 to 6, wherein the housing consists in a channel (68, 70).

8. An assembly according to any one of claims 1 to 7, wherein the shell includes at least two fastener means for fastening to the structure of the vehicle and includes a housing extending longitudinally from one fastener means to the other.

9. An assembly according to any one of claims 1 to 8, including a shell liner that engages with the shell, forming therewith a hollow body defining the housing that receives the reinforcement.

10. An assembly according to any one of claims 1 to 9, wherein the reinforcement performs a function of supporting the beam vertically.

11. An assembly according to any one of claims 1 to 10, wherein the reinforcement is an extension (72, 74) of a tubular side rail having a generator line substantially parallel to the longitudinal direction of the vehicle.

12. An assembly according to claim 11, wherein the extension is in the form of a chamfered tube.

13. An assembly according to any one of claims 1 to 12, wherein the reinforcement (72) includes a support part (78), in particular a support for a stowing/towing ring (79) .

14. A motor vehicle beam for placing behind a bumper skin, the beam being **characterized in that** it comprises a shell and reinforcement assembly according to any preceding claim.

## Patentansprüche

1. Anordnung einer Verstärkung und eines schalenförmigen Trägers eines Kraftfahrzeugs, der hinter der Verkleidung von Stoßfängern angeordnet werden soll, wobei der schalenförmige Träger eine Aufnahme (68,70) zum Anbringen der Verstärkung (72, 74) in seinem Inneren aufweist, wobei es sich bei der Verstärkung beispielsweise um eine Verstärkung aus Metall, insbesondere aus Aluminium, oder um eine Verstärkung aus einem ein Metall enthaltenden Verbundwerkstoff handeln kann, wobei die Aufnahme ein als äußeres Ende bezeichnetes Ende aufweist, das in direkter Nachbarschaft zur Stoßfängerverkleidung angeordnet ist, sowie ein als inneres Ende bezeichnetes Ende, das in direkter Nachbarschaft eines Längsträgers des Fahrzeugs angeordnet ist, wenn der schalenförmige Träger am Fahrzeug montiert wird, wobei die Aufnahme (68, 70) so dimensioniert ist, dass sie in die äußere Form der Verstärkung in dem Teil des schalenförmigen Trägers hineinpasst, der senkrecht zu dem Längsträger angeordnet ist, **dadurch gekennzeichnet, dass** die Verstärkung eine Verlängerung (72, 74) des Längsträgers darstellt, der die gesamte Dicke des schalenförmigen Trägers dergestalt durchquert, dass im Falle eines Aufpralls die Verlängerung der Beanspruchung standhält, wobei die Verstärkung an ihrem Ende, das sich senkrecht zum Längsträger befindet, mit einer Platte ausgerüstet ist.

2. Anordnung nach Anspruch 1, in der der schalenförmige Träger durch Spritzguss, durch Druckformgebung oder durch Extrusionspressen hergestellt wird.

3. Anordnung nach Anspruch 1 oder 2, in der die Aufnahme durch einen Teil des schalenförmigen Trägers (17) begrenzt wird, der einen offenen Abschnitt darstellt.

4. Anordnung nach einem der Ansprüche 1 bis 3, in der der schalenförmigen Träger so dimensioniert ist, dass er in die innere Form der Stoßfängerverkleidung hineinpasst, hinter der der Träger angeordnet werden soll.

5. Anordnung nach einem der Ansprüche 1 bis 4, in der der schalenförmige Träger mehrere Aufnahmen zum Anbringen mehrerer Verstärkungen aufweist.

6. Anordnung nach einem der Ansprüche 1 bis 5, in der der schalenförmige Träger aus einem thermoplastischen Werkstoff, insbesondere aus Polypropylen, hergestellt wird.

7. Anordnung nach einem der Ansprüche 1 bis 6, in der die Aufnahme aus einem Kanal (68, 70) besteht.

8. Anordnung nach einem der Ansprüche 1 bis 7, in der der schalenförmige Träger mindestens zwei Mittel zum Befestigen an der Fahrzeugstruktur aufweist und eine Aufnahme aufweist, die sich von einem Befestigungsmittel zum anderen in Längsrichtung erstreckt.

9. Anordnung nach einem der Ansprüche 1 bis 8, die eine Innenverkleidung des schalenförmigen Trägers aufweist, die in den schalenförmigen Träger eingepasst wird und einen Hohlkörper bildet, der die Aufnahme, in welche die Verstärkung eingesetzt wird, begrenzt.

10. Anordnung nach einem der Ansprüche 1 bis 9, in der durch die Verstärkung die Funktion übernimmt, den Träger senkrecht zu halten.

11. Anordnung nach einem der Ansprüche 1 bis 10, in der es sich bei der Verstärkung um eine Verlängerung (72, 74) eines rohrförmigen Längsträgers handelt, welcher eine zur Längsrichtung des Fahrzeugs im Wesentlichen parallele Mantellinie aufweist.

12. Anordnung nach Anspruch 11, in der die Verlängerung die Form eines abgeschrägten Rohres aufweist.

13. Anordnung nach einem der Ansprüche 1 bis 12, in der die Verstärkung (72) ein Halteteil (78), insbesondere eine Halterung für eine Abschleppöse (79), aufweist.

14. Träger eines Kraftfahrzeugs, der zum Einbau hinter der Verkleidung von Stoßfängern vorgesehen ist, **dadurch gekennzeichnet, dass** er eine Anordnung einer Verstärkung und eines Gestells nach einem der vorhergehenden Ansprüche umfasst.
